# EUROPÄISCHE PATENTSCHRIFT

(11) **EP 3 702 729 B1**
(45) Veröffentlichungstag und Bekanntmachung des Hinweises auf die Patenterteilung: **22.12.2021**
(21) Anmeldenummer: 20155048.0
(22) Anmeldetag: 03.02.2020
(51) Int. Cl.: G01C 17/12, G01C 17/04

(54) **KOMPASS**
COMPASS
BOUSSOLE

(30) Priorität: 28.02.2019 RU 2019105796
(43) Veröffentlichungstag der Anmeldung: 02.09.2020
(73) Patentinhaber: Chropov, Sergey Mikhaylovich, Moscow, 109147 (RU)
(72) Erfinder: CHROPOV, Sergey M., 109147 Moskau (RU); CHROPOV, Andrey S., 117447 Moskau (RU); FILIMONOV, Mikhail T., 141195 Fryazino Moskovskaya obl. (RU)
(74) Vertreter: Jeck, Anton

(56) Entgegenhaltungen:
- SE-C2- 508 194
- US-A- 4 462 164

## Beschreibung

Die vorliegende Erfindung betrifft einen Kompass zur Orientierung im Gelände. Die Erfindung kann im Orientierungslaufsport eingesetzt werden. Der Orientierungslauf (OL) ist eine intellektuelle Sportart.

Bei dieser Sportart müssen die Sportler (Läufer) Kontrollpunkte (KP) ablaufen. Die KP sind im Gelände festgelegt. Dabei benutzen die Sportler (Läufer) Orientierungslaufkarte und Kompass. Die Ergebnisse werden in der Regel nach der benötigten Durchgangszeit ermittelt. Beim OL spielt die meisterhafte Beherrschung der Orientierungstechnik für das Erbringen von Leistungen eine entscheidende Rolle. Dieses Können des Läufers setzt sich aus den Grundelementen der OL-Technik und deren Ausführung zusammen. Dazu gehören:
- Kartenlesen,
- "Laufen in Azimut (nach dem Richtungswinkel)",
- Kontrolle des zurückgelegten Abschnitts (Moderne Vorbereitung von Orientierungsläufern, s. A.A. Schirinjan, A.W. Iwanow. - M.: Sowetskij sport, 2010, S. 12, 1.2. Elemente der OL-Technik).

Der Baustein der OL-Technik setzt voraus, dass der Läufer einen Teil der Laufstrecke (zum Beispiel vom KP A bis zum KP B) auf Linie läuft. Die Linie soll einer Geraden nahe sein. Der Baustein der OL-Technik ist "Laufen in Azimut (nach dem Richtungswinkel)".

Auf der Orientierungslaufkarte sind die KP A und B aufgetragen. Diese sind untereinander durch eine Linie (Strecke AB) verbunden. Außerdem sind auf der Karte gerichtete Linien der magnetischen Nordrichtung (Magnetisch-Nord) eingezeichnet. Das sind die Nord-Linien mit der Nord-Markierung. Der Winkel zwischen der Linie der magnetischen Nordrichtung und der AB-Strecke auf der Karte wird als Azimut bezeichnet. Für das Laufen in Azimut (nach dem Richtungswinkel) muss der Sportler den Azimutwinkel von der Karte auf die Umgebung übertragen. Dabei muss er einen Kompass benutzen.

Die Offenbarung SE 508 194 C2 betrifft einen Orientierungslaufkompass aus einer Kapsel mit einem magnetischen Zeiger und einer Platte an der eine Schlaufe befestigt ist, wobei mit der Schlaufe der Kompassempfänger gehalten werden kann.

Ein moderner OL-Kompass besteht üblicherweise aus zwei Hauptteilen. Diese Teile umfassen eine Kapsel und eine Platte. Die Kompassnadel (der magnetische Zeiger) befindet sich innerhalb einer hermetisch dichten flachen Kapsel. Die Kapsel ist mit einer Flüssigkeit gefüllt. Unter dem Einfluss des Erdmagnetfelds stellt sich die Kompassnadel parallel der magnetischen Nordrichtung ein. Dabei dreht sich die Kompassnadel frei um die eigene Achse. Die Kapsel wird in die Kompass-Platte eingebaut. Zurzeit hat sich im OL besonders ein Kompass etabliert, bei dem die Platte am Daumen gehalten wird ("Daumenkompass"). Die Platte wird am Daumen der Hand des Läufers mit Hilfe einer Gummischlaufe gehalten (ebenda, S. 8).

Der Vorteil einer solchen Platte besteht in einer ständigen Überdeckung dieser Kompassplatte mit der Karte. Dadurch wird eine ständige und einfache Orientierung mit der Karte sichergestellt.

Die Platte weist eine Kantenlinie auf. Die Kantenlinie ist die Plattenkante. Am Kantenrand der Platte ist eine farbige Linie aufgetragen. Die Kantenlinie dient zur Angabe der Bewegungsrichtung des Läufers.

Dieser Kompass wird als nächstliegend zur vorliegenden Erfindung angesehen. Er wurde zum Prototyp gewählt.

Für den Kompass gemäß dem Prototyp besteht die Ausführung des Grundelements der OL-Technik "Laufen in Azimut (nach dem Richtungswinkel)" in Folgendem:
Der Läufer befindet sich im Gelände im Punkt A. Er positioniert die Kompassplatte auf der Karte. Die Kantenlinie der Platte und die AB-Strecke auf der Karte sollen dabei parallel werden. Danach dreht sich der Läufer um seine eigene Achse, bis sich die Kompassnadel der Nord-Linie auf der Karte parallel eingestellt hat. Dabei sollen die Nord-Markierung N auf der Kompassnadel und die auf der Karte in die gleiche Richtung zeigen. Jetzt zeigt die Kantenlinie der Kompassplatte die Richtung im Gelände vom KP A zum KP B. Mit seinem Blick verlängert der Läufer gedanklich diese Kantenlinie. Dabei überträgt er sie auf die Gegend. Danach kann er die Bewegung in der gewählten Richtung beginnen. Eine maximale Parallelität der Kantenlinie der Platte und der AB-Strecke kann dadurch erreicht werden, dass die beiden übereinander (überdeckend) positioniert werden. In diesem Fall kann eine maximale Genauigkeit beim Laufen in Azimut (nach dem Richtungswinkel) erreicht werden.

Ein anderer Baustein der OL-Technik ist das Kartenlesen. Dieses setzt einen komplizierten geistigen (intellektuellen) Prozess der gedanklichen Übertragung der Orientierungsmarken der OL-Karte auf die Objekte im Gelände voraus. Außerdem ist beim Kartenlesen erforderlich, eine Wahl aus optimalen Varianten der Fortbewegung zu treffen.

Zum Kartenlesen muss die Karte im betreffenden Bereich der Orientierung vollständig übersichtlich sein (Strecke AB), sowohl links als auch rechts von dieser Strecke. Normalerweise wird die Kompassplatte aus massivem transparenten Kunststoff gefertigt. Die Kunststoffstärke beträgt wenige Millimeter. Die Durchsichtigkeit des Kunststoffs ist nicht vollständig. Diese weist Volumendefekte der Lichtbrechung auf. Beim Benutzen im Gelände wird die Plattenoberfläche schmutzig, es entstehen Kratzer darauf. Außerdem spiegelt die Plattenoberfläche. Die farbige Kantenlinie stört den Läufer dabei, die Karte darunter zu lesen. Dies erschwert das Lesen der Karte unter der Platte.

Aus diesem Grund muss der Läufer die Kantenlinie der Kompassplatte von der Strecke AB auf der Karte etwas beiseiteschieben. Durch diese Verschiebung entsteht eine Abweichung (ein Fehler) bei der Herstellung der Parallelität der zwei Strecken. Je größer die Verschiebung, desto größer die Abweichung. Der Parallelitätsfehler führt automatisch zu einer Abweichung beim Laufen in Azimut (nach dem Richtungswinkel).

Somit wird durch die Vergrößerung der Kantenlinienverschiebung von der Strecke AB auf der Karte eine Vergrößerung der Abweichung beim Laufen in Azimut verursacht.

Im Zuge der Orientierung im Gelände verwendet der Läufer die Grundelemente der OL-Technik immer abwechselnd, und zwar, das Laufen in Azimut (nach dem Richtungswinkel) und das Kartenlesen. Dabei tritt ein technischer Widerspruch in den Vordergrund, nämlich: Bei einer geringen Verschiebung zwischen der Kantenlinie und der Strecke AB wird die Lesbarkeit der Orientierungslaufkarte schlechter. Dabei wird die Abweichung beim Laufen in Azimut (nach dem Richtungswinkel) verringert. Bei einer größeren Verschiebung wird die Abweichung beim Laufen in Azimut (nach dem Richtungswinkel) größer. Dabei verbessert sich die Lesbarkeit der Karte.

In der Praxis wird ein Ausgleich in Bezug auf die Verschiebung getroffen. Gemäß einer Umfrage bei den OL-Sportlern beträgt die Verschiebungsgröße ca. 1 cm. Somit weist der Prototyp die Mängel auf, dass:
- der lesbare Bereich der Orientierungslaufkarte eingeschränkt ist,
- eine Abweichung beim Laufen in Azimut (nach dem Richtungswinkel) vorliegt,
- der zeitliche sowie Geistesaufwand des Läufers vergrößert wird.

Im Endeffekt führen diese Faktoren dazu, dass sich die benötigte Durchgangszeit der Distanz vergrößert. Außerdem wird die sportliche Leistung beeinträchtigt.

### Aufgabe der Erfindung

Es ist die Aufgabe der Erfindung,
- die Lesbarkeit der Orientierungslaufkarte zu verbessern,
- die Abweichung beim Laufen in Azimut (nach dem Richtungswinkel) zu minimieren,
- den zeitlichen Aufwand des Läufers zu verringern.

Dies ermöglicht es dem Läufer, höhere sportliche Leistungen zu erbringen.

### Kurzfassung der Erfindung

Die genannte Aufgabe wird dadurch gelöst, dass der Orientierungslauf-Kompass eine Kapsel mit einer Magnetnadel und eine Platte umfasst. An der Platte ist eine Schlaufe (ein Riemen) befestigt. Mit dieser Schlaufe kann der Kompass am Finger gehalten werden. Die Platte weist eine Kantenlinie in Bewegungsrichtung auf. Die Verlängerung der Kantenlinie der Bewegungsrichtung verläuft durch die Mitte der Kapsel. Die Platte weist eine Aussparung auf. Die Aussparung umfasst den mittleren Teil (Bereich) der Kantenlinie und teilweise die Ebene der Platte (Plattenfläche). Ein Teil der Plattenfläche grenzt an den mittleren Teil der Kantenlinie.

Die Aufgabe der Erfindung wird auch dadurch gelöst, dass in der Aussparung zwischen den Strecken der Kantenlinie sich ein farbiger geradliniger Faden befindet. Bei der Benutzung eines erfindungsgemäßen Kompasses kann die Strecke AB auf der Karte in der sich gebildeten Öffnung (einem "Fenster") in der Platte strikt auf der Linie zwischen den Strecken der Kantenlinie angeordnet werden.

Dabei werden folgende positive Effekte erzielt:
1) eine unbehinderte Übersicht über die Objekte auf der Karte; dies gilt für die Objekte sowohl links als auch rechts von dieser Strecke AB;
2) eine maximale Parallelität der AB-Strecke und der Kantenlinie der Platte; dank dieser Parallelität kann eine maximale Azimutgenauigkeit erreicht werden;
3) die Stelle mit dem Überblick über die Kantenlinie und die Strecke AB befinden sich im gleichen Bereich der Karte; dadurch werden der zeitliche sowie der geistige Aufwand des Läufers bei der Ausführung verschiedener Grundelemente der OL-Technik reduziert.

Die vorliegende Erfindung kann folgendermaßen intensiviert werden:
In der Aussparung zwischen den Strecken der Kantenlinie wird ein Abschnitt des farbigen Fadens angeordnet. Der feine Faden ist beim Kartenlesen praktisch unbemerkbar. Mit dem Faden kann die Kantenlinie der Platte auf die Strecke AB auf der Karte präziser angelegt werden. Dadurch wird die Abweichung beim Laufen in Azimut noch mehr minimiert.

Zusätzlich kann auf dem Faden ein farbiger Punkt aufgetragen werden. Dieser Punkt ermöglicht es dem Läufer, sich selbst auf der Karte zu verfolgen.

Die Hinzufügung eines zusätzlichen Punkts mit einem bekannten Abstand zwischen den Punkten, z. B. 1 cm, ermöglicht es dem Läufer, anhand des Kartenmaßstabs die zurückgelegte Strecke zu kontrollieren.

### Beschreibung eines Ausführungsbeispiels

Die Erfindung wird nun anhand der Zeichnung näher erläutert.

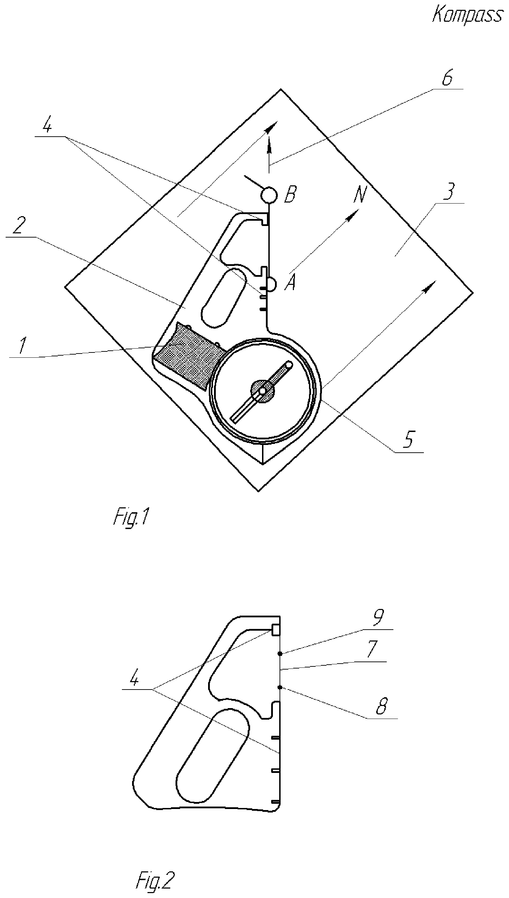

Fig. 1 zeigt eine Draufsicht auf den Kompass nach Anspruch 1, wobei
   1 eine Schlaufe,
   2 eine Kompassplatte,
   3 eine OL-Karte,
   4 eine Kantenlinie der Platte (Strecken),
   5 ein magnetischer Zeiger (Kompassnadel),
   6 die Bewegungsrichtung im Gelände ist.
In Fig. 2 sind zusätzliche Elemente des Kompasses nach Anspruch 2 gezeigt, wobei
   7 ein Faden,
   8 der 1. Punkt auf dem Faden,
   9 der 2. Punkt auf dem Faden ist.

Mit dem vorgeschlagenen Kompass erfolgt die Ermittlung des Azimuts vom KP A zum KP B wie folgt.

Die Schlaufe 1 wird am Daumen umgelegt. Durch die Öffnung in der Platte wird die Platte 2 mit dem Daumen an die Karte 3 angedrückt. Der Läufer positioniert die Kompassplatte auf der Karte. Die Strecke AB auf der Karte (oder deren Teil) soll sich in der Aussparung der Platte und genau auf der Linie zwischen den Strecken der Kantenlinie 4 befinden. Danach dreht sich der Läufer um seine eigene Achse, bis sich die Kompassnadel 5 der Nord-Linie auf der Karte parallel eingestellt hat. Dabei sollen die Nord-Markierung N auf der Kompassnadel und die auf der Karte in die gleiche Richtung zeigen. Jetzt zeigt die Kantenlinie der Kompassplatte die Richtung 6 im Gelände vom KP A zum KP B.

Mit seinem Blick verlängert der Läufer gedanklich diese Kantenlinie. Dabei überträgt er sie auf die vor ihm liegende Gegend. Danach kann er die Bewegung in der gewählten Richtung beginnen.

Der Läufer übt das Laufen in Azimut (nach dem Richtungswinkel) abwechselnd mit dem Kartenlesen aus im betreffenden Bereich der Strecke AB, sowohl links als auch rechts von dieser Strecke. Er vergleicht die Orientierungsmarken der OL-Karte mit denjenigen im Gelände und wählt optimale Varianten der Fortbewegung.

Bei der Hinzufügung des Fadens 7 in die Aussparung der Platte und beim Anlegen der Platte auf die Karte wird der Faden über der Strecke AB auf der Karte liegen. Dadurch können die Herstellung der Parallelität der zwei Strecken sowie das Laufen in Azimut (nach dem Richtungswinkel) vereinfacht werden.

Bei der Hinzufügung eines farbigen Punkts 8 auf dem Faden kann der Punkt die aktuelle Position des Läufers auf der Karte angeben. Darüber hinaus ist dank dieses Punkts das Kartenlesen erleichtert.

Bei der Hinzufügung des zweiten Punkts 9 auf den Faden in einem Abstand von 1 cm vom vorhergehenden Punkt wird der 2. Punkt die Stelle auf der Karte angeben, an die der Läufer nach 100 m des Geländes (bei einem Kartenmaßstab 1:10000) zur Kontrolle der zurückgelegten Strecke gelangen soll.

Der Faden kann aus einem unmagnetischen Metall gefertigt sein. Damit sind die Festigkeit und die Wetterresistenz gewährleistet. Ein solches Metall kann z. B. rostfreier Stahl oder Titan sein.

## Patentansprüche

1. Orientierungslauf-Kompass aus einer Kapsel mit einer Magnetnadel (5) und einer Platte (2), an der eine Schlaufe (1) befestigt ist, wobei mit dieser Schlaufe der Kompass am Finger gehalten werden kann, wobei ferner die Platte eine Kantenlinie (4) in Bewegungsrichtung (6) aufweist und die Verlängerung der Kantenlinie der Bewegungsrichtung durch die Mitte der Kapsel verläuft, wobei die Kompassplatte eine Aussparung aufweist, die den mittleren Teil der Kantenlinie (4) und teilweise die Ebene der Platte (2) umfasst, wobei ein Teil der Plattenfläche an den mittleren Teil der Kantenlinie angrenzt, **dadurch gekennzeichnet, dass** in der Aussparung zwischen den Strecken der Kantenlinie sich ein farbiger geradliniger Faden (7) befindet.

## Claims

1. Orientation compass comprising a capsule with a magnetic needle (5) and a plate (2) to which a loop (1) is attached, with which loop the compass can be held on a finger, further wherein the plate has an edge line (4) in the direction of movement (6) and the extension of the edge line of the direction of movement passes through the middle of the capsule
wherein the compass plate has a recess comprising the central part of the edge line (4) and partly the plane of the plate (2), a part of the plate surface being adjacent to the central part of the edge line,
**characterized in**
**that** a colored rectilinear thread (7) is located in the recess between the stretches of the edge line.

## Revendications

1. Compassé d'orientation d'une capsule munie d'un tableau magnétique (5) et d'un panneau (2) où est fixée une boucle (1) où le compasse à l'aide de cette dernière peut être manipulée par le doigt où le panneau par ailleurs présente une ligne de balayage (4) en direction de déplacement (6) et le prolongement de la ligne de balayage de la direction de déplacement passe par le milieu de la capsule où le panneau de compassé présente une cavité composant la partie milieu de la ligne de balayage (4) et partiellement les niveaux du panneau (2) où une partie de la surface du panneau est adjacente à la partie milieu de la ligne de balayage caractérisé de sorte qu'un fil coloré rectiligne (7) se trouve au niveau de l'évidement entre les étirages de la ligne de balayage.
